# EUROPEAN PATENT APPLICATION

(11) **EP 3 254 831 A1**
(43) Date of publication of application: **13.12.2017**
(21) Application number: 16173189.8
(22) Date of filing: 06.06.2016
(51) Int. Cl.: B29C 65/36, B65B 7/28, B65B 51/22

(54) **SEALING HEAD**

(71) Applicant: Fords Packaging Systems Limited, Bedford, Bedfordshire MK42 7SH (GB)
(72) Inventor: STONE, David, Sheffield, S20 7LZ (GB); WHITLOCK, Sefton, Arlesey, Bedfordshire SG15 6SZ (GB); MAHER, Luke, Harpenden, Hertfordshire AL5 5LE (GB)
(74) Representative: Worthington, Richard Easton

(57) **Abstract**

An induction sealing head, an induction sealing system and a method for sealing a closure (704, 804, 904, 1004) to an aperture of a container are disclosed. The induction sealing head is for sealing a closure (704, 804, 904, 1004) to an aperture of a container, and includes an induction coil (702, 802, 902, 1002), wherein the induction coil (702, 802, 902, 1002) is wound about an axis, and has a first portion (710, 810, 906, 1016) lying substantially in a first plane perpendicular to the axis, and a second portion (712, 812, 908, 1018) stepped out of the first plane, and lying substantially in a second plane parallel with the first plane.

## Description

### Field of the Invention

This invention relates to an induction sealing apparatus and a method for sealing a closure to a container.

### Background to the Invention

Induction sealing is a well-known process which is used to seal a closure to an aperture of a container. A known induction sealing system includes a sealing head which includes an induction coil wound in shape corresponding to the shape of the aperture to be sealed. A multi-layer closure is positioned over the aperture of the container, and the container is positioned under the sealing head. The closure typically includes a metal foil layer and a polymer layer. The sealing head is moved near to the closure and container, and the induction coil is supplied with an alternating current. When an electric current is applied to the coil, a magnetic field is generated, which induces eddy currents in the foil closure. As a consequence, the temperature of the foil closure increases, causing the polymer layer on an underside of the metal foil layer to melt and bond the closure to the aperture of the container, forming a hermetic seal between the closure and the container.

Such a system is suitable for sealing closures having a circular shape and a uniform thickness to containers having circular apertures. In such cases, a circular coil is used. However, for a closure having a non-circular shape or a closure having a non-uniform thickness, such as a closure which includes a folded-back tab, a circular coil is not suitable, since some regions of the closure require different amounts of heat to create a hermetic seal with the closure.

Another known induction sealing system achieves a varied heating profile in the closure by incorporating ferrites into the sealing head in order to concentrate the magnetic field generated by the induction coil at particular locations, thereby increasing the heating effect at corresponding locations within the closure. However, ferrites can behave in an unpredictable and inconsistent manner, and the exact position of a ferrite in an induction coil required to achieve a particular heating profile in a closure can be difficult to predict.

Thus there is a problem that an induction coil may not induce heat in a closure in a desired manner. In some instances, for example, uneven heating could result in the closure not being hermetically sealed to the container and, therefore, contents of the container could be spoiled.

### Summary of Invention

According to a first aspect, the present invention provides an induction sealing head for sealing a closure to an aperture of a container, the sealing head comprising an induction coil, wherein the induction coil is wound about an axis, and has a first portion lying substantially in a first plane perpendicular to the axis, and a second portion stepped out of the first plane, and lying substantially in a second plane parallel with the first plane. The second plane may be substantially parallel to the first plane.

The induction coil may have a third portion stepped out of the first plane and/or the second plane, and lying substantially in a third plane. The third plane may be parallel with the first plane and with the second plane.

The induction coil may include a third portion stepped out of the first plane or the second plane, and lying substantially in a third plane. The third plane may be substantially parallel to at least one of the first plane and the second plane.

The induction coil may be a multi-turn coil. The induction coil may be at least partially enclosed within a magnetic material. The magnetic material may comprise a ferrite.

The sealing head may further comprise a contact pad for engaging with a closure to be sealed. The contact pad may lie substantially in a plane parallel to the first plane and the second plane, and the distance between the contact pad and the first plane may be different from the distance between the contact pad and the second plane.

The induction coil may have a shape that is substantially circular. The first and second portions of the induction coil may each constitute approximately half of the induction coil.

The induction coil may have a shape that is substantially rectangular. The second portion of the induction coil may constitute at least one corner of the induction coil.

According to a second aspect, the present invention provides an induction sealing system comprising an induction sealing head as described above; and means for moving the closure and the container into a position relative to the sealing head such that the sealing head can induce a current in the closure. The means for moving the closure and the container may comprise a linear conveyor, a rotary conveyor or a star wheel conveyor. The closure includes an electrically conducting layer, typically a metal foil, so as to be heated by electromagnetic induction by the induction sealing head. The closure also includes a polymer layer which when heated and subsequently cooled forms a bond with the container aperture.

According to a third aspect, the present invention provides a method for sealing a closure to an aperture of a container, the method comprising providing a sealing head having an induction coil which is wound about an axis, the induction coil having a first portion lying substantially in a first plane perpendicular to the axis, and a second portion stepped out of the first plane, and lying substantially in a second plane parallel with the first plane; and supplying a current to the induction coil such that the induction coil is capable of inducing a current in the closure to thereby heat the closure and seal the closure to the aperture of the container. The sealing head may be a sealing head as described above.

It will be appreciated that the features of any of the various aspects of the invention may be combined with features of any other aspects of the invention.

### Brief Description of the Drawings

Embodiments of the invention will now be described, strictly by way of example only, with reference to the accompanying drawings, of which:
Figure 1 is a schematic view of an induction system constructed in accordance with the present invention;
Figures 2, 3, 4, 5 and 6 are perspective views of closures suitable for being sealed to containers by the present invention;
Figure 7, 8, 9 and 10 are perspective view of closures and corresponding induction coils constructed according to various embodiments of the invention; and
Figure 11 is a schematic view of an induction sealing head constructed in accordance with embodiments of the invention.

### Description of the Embodiments

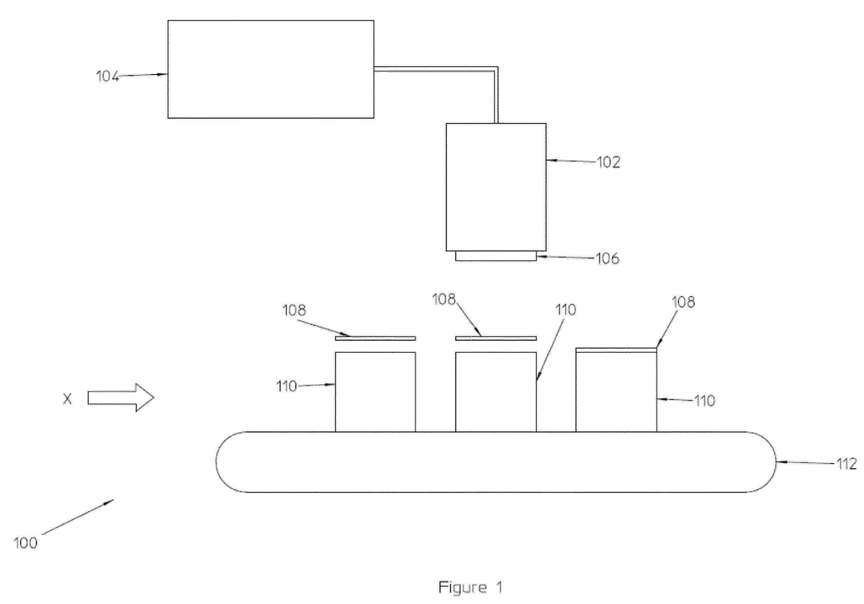

Referring to the drawings, Figure 1 shows, schematically, an induction sealing system 100 constructed in accordance with the present invention. The sealing system 100 includes a sealing head 102 which is connected to a generator 104 which contains control electronics and other components (not shown) for supplying an alternating current to an induction coil 106. For example, in one embodiment, the induction coil 106 is connected to at least one capacitor in series or in parallel to form a resonant circuit. The resonant circuit is energised by a high frequency power source (not shown), and may include a matching transformer. The induction coil 106 may be a single or multi-turn wound conductor, and may be formed of any suitable material, for example litz wire. In some embodiments, the induction coil 106 is partially or fully enclosed or embedded within a potting compound (not shown).

The sealing system 100 can be used to seal one of a plurality of closures 108 to a corresponding one of a plurality of containers 110 as the closure and the container pass under the sealing head 102. The closure includes a metal foil layer and a polymer layer. When heated the polymer layer flows into the container aperture and when cooled the polymer layer forms a bond with the container aperture resulting in a hermitically sealed product. The sealing system 100 may include conveying means, such as a linear or rotary conveyor 112 or a star wheel conveyor (not shown) for moving each container 110 into a required position beneath the sealing head 102 for sealing. In this regard, the conveyor 112 of this embodiment is configured to move the containers 110 in a direction shown by arrow X, such that an unsealed container and its closure are moved along the conveyor 112 until it is beneath the sealing head 102. The sealing head 102 is then lowered, and an alternating current is supplied to the coil 106 for a duration sufficient for the closure to be heated to a temperature sufficient to seal the closure to the container. The sealing head is then raised upwards, away from the container and the sealed container is moved away from the sealing head so that an unsealed container can be moved into position beneath the sealing head.

In some embodiments, the induction coil 106 of the sealing head 102 is brought close to a closure 108 and container 110 to be sealed, but no contact is made between the induction coil and the closure. In other embodiments, the sealing head 102 includes a crimp rubber (not shown) positioned beneath the induction coil 106 such that, when the sealing head is lowered towards the closure 108 and the container 110 to be sealed, the crimp rubber engages the closure, applying pressure to the closure and the container to aid the sealing process. In some embodiments, the crimp rubber also serves to crimp and fold down an excess peripheral portion of the closure, known as a skirt.

In known sealing systems used for sealing circular closures to containers having circular apertures, a ring-shaped induction coil is used. Such a coil is oriented substantially parallel to the closure to be sealed, and is wound in a single plane. In general, the shape of an induction coil used in a sealing head corresponds to the shape of the closure and/or the aperture of the container being sealed.

In the sealing system 100 of the present invention, the induction coil 106 is wound such that the coil defines a central plane, but has at least one portion extending out of that plane, as will be described below.

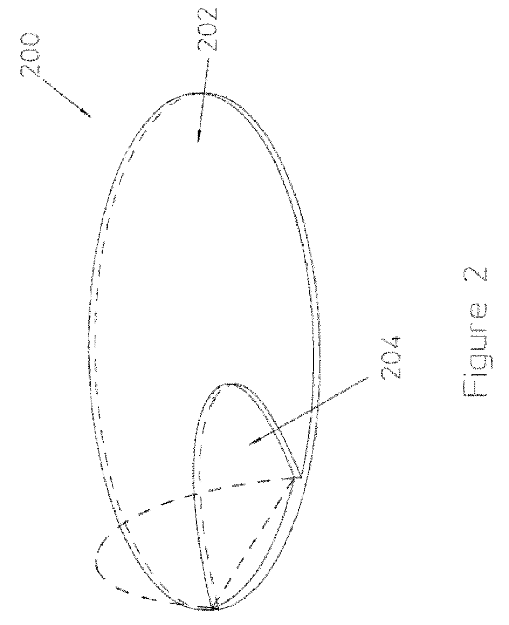

Figures 2, 3, 4, 5 and 6 show examples of closures of various shapes and configurations that can be sealed to containers of corresponding shapes using the present invention.

Figure 2 shows a substantially round closure 200, which includes a main portion 202, which serves to seal a round aperture in a container, and a tab portion 204 which is folded flat onto the main portion 202 during the sealing process. When it is necessary to open the container and gain access to the contents of the container, then the tab portion 204 can be lifted upwards into a position shown by the dashed line, thereby making it easier for a user to remove the closure 200 from the container to which it is sealed.

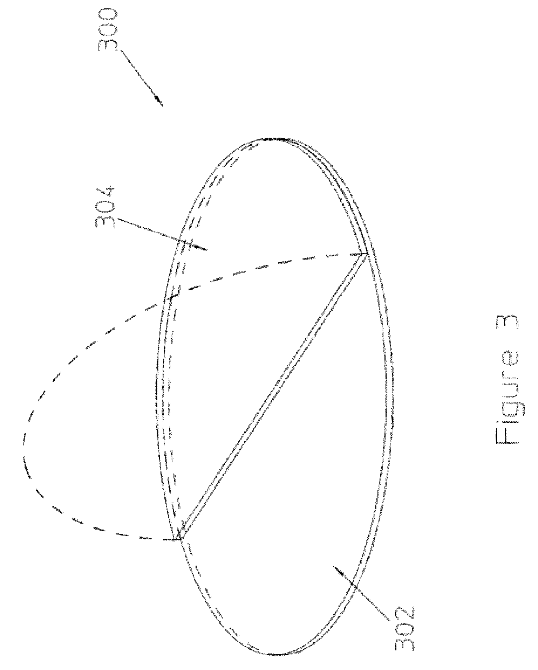

Figure 3 shows a shows a round closure 300 having a main portion 302 which serves to seal a round aperture in a container, and a semi-circular tab portion 304 which is folded flat onto the main portion 302 during the sealing. Again, when it is necessary to open the container and gain access to the contents of the container, then the semi-circular tab portion 304 can be lifted upwards into a position shown by the dashed line, thereby making it easier for a user to remove the closure 300 from the container to which it is sealed.

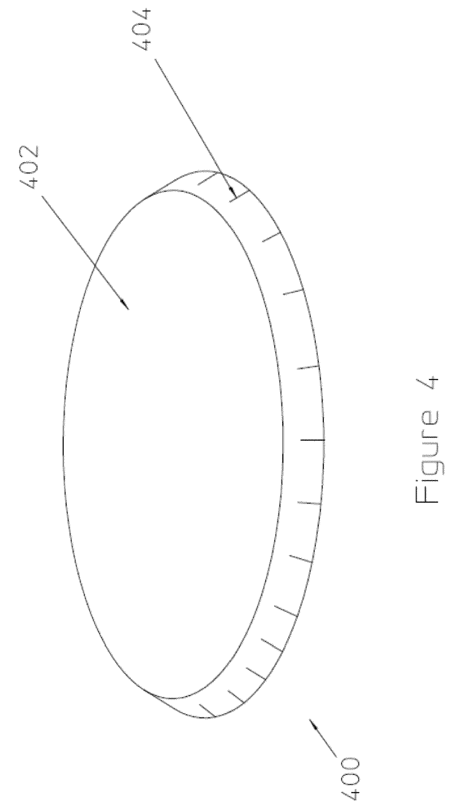

Figure 4 shows a round skirted closure 400 having a main portion 402 which serves to seal a round aperture in a container, and a peripheral skirt portion 404, which is not intended to be sealed to a container, but which may be crimped and folded down onto a container using a crimp rubber as discussed above.

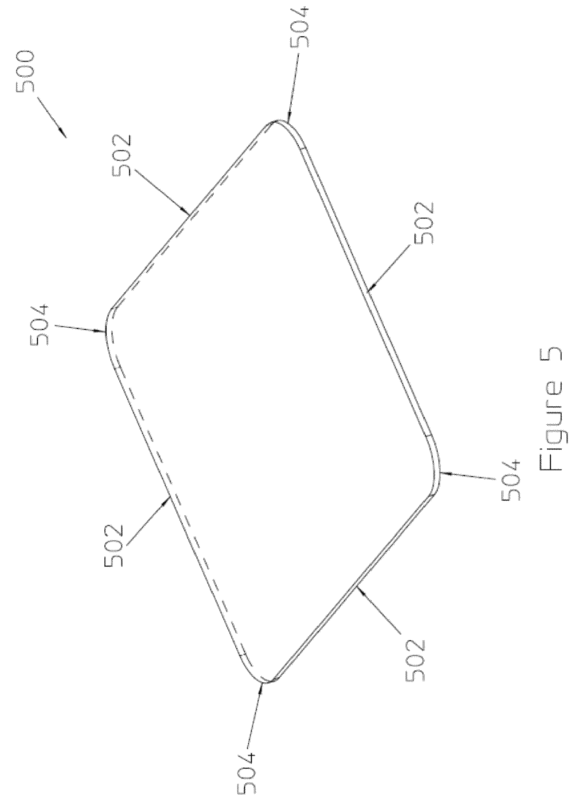

Figure 5 shows a closure 500 which is substantially rounded rectangular in shape - that is to say substantially rectangular with straight sides 502 and rounded corners 504 - but does not include a tab portion.

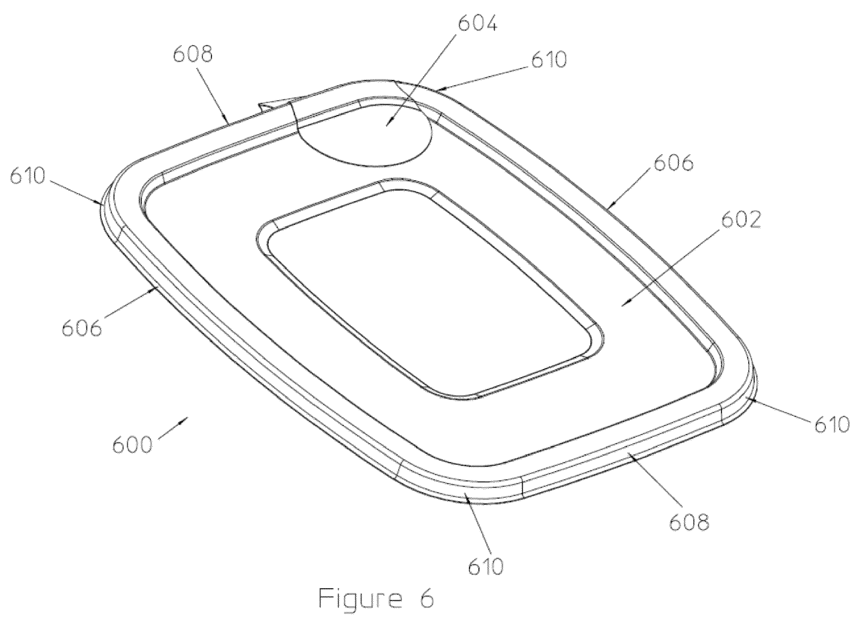

Figure 6 shows a closure 600 which similar in shape to the closure 500, but which has a main portion 602 and a tab portion 604. The rounded rectangular closure 600 includes two relatively longer substantially straight sides 606 and two relatively shorter substantially straight sides 608 which are joined to the longer straight sides by curved portions 610.

Each of the closures shown in Figures 2 to 6 includes at least one feature which affects the heating profile in the closure resulting from a current induced by an induction coil, as will now be discussed.

The closures 200, 300 and 600 shown in Figures 2, 3 and 6 respectively include fold-back tab portions which increase the overall thickness of those portions of the closures. Consequently, when each of closures 200, 300 and 600 undergoes a sealing process, a magnetic field generated by an induction coil would be attenuated or shielded by the additional tab portion, resulting in a reduced heating effect in the portion of the closure beneath the tab portion.

When the closure 400 shown in Figure 4 undergoes a sealing process, the skirt portion 404 affects a magnetic field generated by an induction coil by drawing some of the magnetic field away from the main portion 402 of the closure, and towards the skirt portion 404, thereby reducing the heating effect in the main portion of the closure. The skirt portion 404 of the closure 400 is substantially uniform and continuous around the main portion 402 of the closure. However, in other embodiments, the non-uniform skirt portions may be used, for example having regions of different lengths. Such non-uniform skirt portions would further affect the magnetic field generated by an induction coil and, hence, the heating profile within the closure.

In the closures 500 and 600 shown in Figures 5 and 6 respectively, the corner portions of each of the closures affect the heating profile resulting from an induced current from an induction coil. When such closures undergo a sealing process, the currents induced in portions of the closure along the straight sides 606, 608 differ from the currents induced at the curved portions 610 of the closure. At the corner portions 610 of the closure 600, the magnetic field generated by the induction coil is weaker than at the straight portions 606 of the closure. Thus, the heating effect resulting from the induced current at the curved portions 610 of the closure is not as great as the heating effect at the straight side portions 606 of the closure.

The present invention enables control of the heating effect of the closure at particular locations in the closure. A sealing head constructed in accordance with the present invention includes an induction coil which is wound substantially in a plane parallel to the closure and to the aperture of the container to be sealed, but which has at least one region extending out of the plane. Put another way, the induction coil has a first portion lying substantially in a first plane, and a second portion stepped out of the first plane, and lying substantially in a second plane. The first and second planes are necessarily substantially parallel to the aperture of the container to be sealed. The magnetic field generated from whichever portion of the induction coil that lies in a plane relatively closer to the closure will have a greater effect on the closure that the portion of the induction that lies in a plane relatively further away from the closure. Thus, by stepping portions of the induction coil into planes lying closer to, or further away from, the closure, it is possible to accurately control the amount of heat induced in particular portions of the closure.

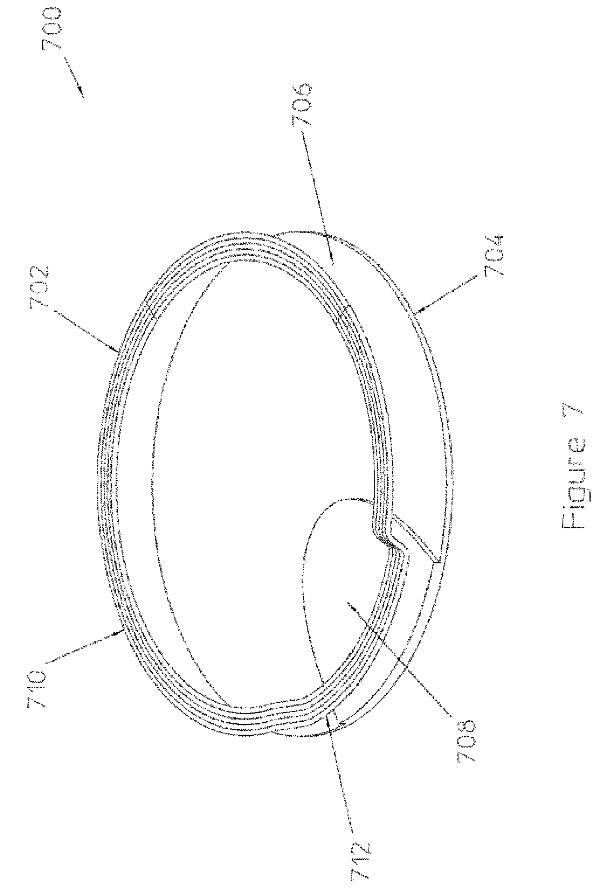

Figures 7, 8, 9 and 10 show examples of arrangements of induction coils suitable for sealing the closures of Figures 2, 3, 5 and 6, respectively. It will be appreciated that, in use, each induction coil will form part of a sealing head, the rest of which is not shown in Figures 7 to 10 for clarity.

Figure 7 shows an arrangement 700 which includes an induction coil 702 and a closure 704. The closure 704 is similar to the closure 200 shown in Figure 2 in that it is a round closure which has base portion 706 and a folded-back tab portion 708 joined to the base portion. The tab portion 708 can be lifted upwards to provide means for a more easily remove the closure 704 from a container to which it is sealed. When the tab portion 708 is laid flat against the base portion 706, the thickness of the closure 704 in the region including the tab portion 708 is greater than the thickness in the un-tabbed region. In other words, the total thickness of closure 704 in the region including the tab portion 708 includes the thickness of the base portion 706 and the thickness of the tab portion 708, whereas the thickness of the un-tabbed region of the closure includes only the thickness of the base portion.

To compensate for the extra material in the part of the closure 704 having the tab portion 708, the induction coil 702 has a first portion 710 wound in a first plane substantially parallel to the closure 704, and a second portion 712 which is stepped out of the first plane, and lies in a second plane such that separation between the second portion 712 and the closure is less than the separation between the first portion 710 and the closure. As a consequence, when the closure 704 is moved under a sealing head which includes the induction coil 702 in order to be sealed, the magnitude of the currents induced in the base portion 706 of the closure will be less than the magnitude of the currents induced in the portion of the closure which includes the tab portion 708. Although the magnitude of the magnetic field generated from the second portion 712 of the induction coil 702 is equal to the magnitude of the magnetic field generated from the first portion 710 of the induction coil 702, the reduced separation between the second portion of the induction coil and the closure compensates for the increased thickness of the portion of the closure 704 which includes the tab portion 708, resulting in a relatively uniform heating effect around the edge of the closure.

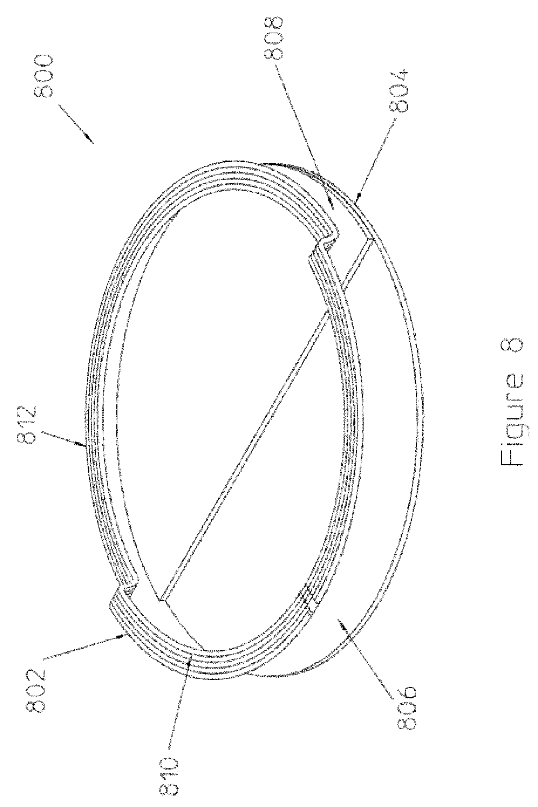

Figure 8 shows an arrangement 800 including an induction coil 802 and a closure 804. The closure 804 is similar to the closure 300 shown in Figure 3 in that it is a round closure which has base portion 806 and a semi-circular tab portion 808 joined to the base portion 806. The tab portion 808 can be lifted upwards to provide means for more easily removing the closure 804 from a container to which it is sealed. When the tab portion 808 is laid flat against the base portion 806, the thickness of the closure 804 on the tabbed half is greater than the thickness on the other, un-tabbed half. In other words, the total thickness of one half of the closure 804 includes the thickness of the base portion 806 and the thickness of the tab portion 808, whereas the thickness of the other half of the closure includes only the thickness of the base portion.

To compensate for the extra material on the side of the closure 804 having the tab portion 808, the induction coil 802 has first portion 810 wound in a plane substantially parallel to the closure 804, and a second portion 812 which is stepped out of the first plane, and lies in a second plane such that separation between the second portion 812 and the closure is less than the separation between the first portion 810 and the closure. As a consequence, when the closure 804 is moved under a sealing head which includes the induction coil 802 in order to be sealed, the magnitude of the currents induced in the base portion 806 of the closure will be less than then magnitude of the currents induced in the portion of the closure which includes the tab portion 808. Although the magnitude of the magnetic field generated from the second portion 812 of the induction coil 802 is equal to the magnitude of the magnetic field generated from the first portion 810 of the induction coil, the reduced separation between the second portion of the coil and the closure compensates for the increased thickness of the portion of the closure 802 which includes the tab portion 808, resulting in a relatively uniform heating effect around the edge of the closure.

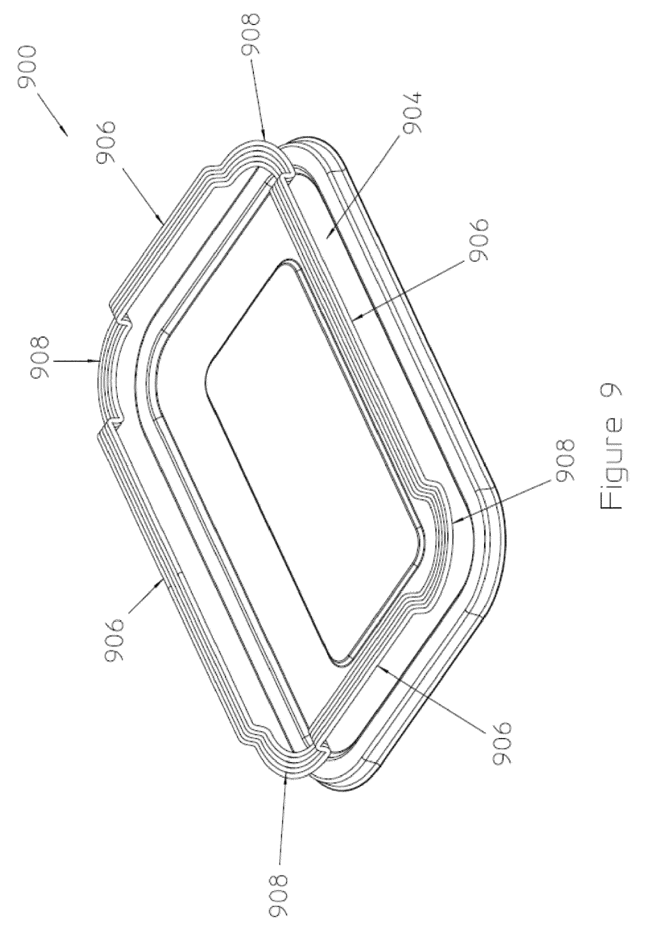

Figure 9 shows an arrangement 900 including an induction coil 902 suitable for sealing a closure 904. The closure 904 is tab-less, and has a rounded rectangle shape, similar to the closure 500 of Figure 5. As can be seen in Figure 9, the induction coil 902 has straight portions 906 which lie in a first plane substantially parallel to the closure 904. The induction coil 902 has corner portions 908 which are stepped out of the first plane, and lie in a second plane such that the separation between each of the corner portions and the closure 904 is smaller than the separation between each of the straight portions 906 and the closure. As a consequence, when the closure 904 is moved under a sealing head which includes the induction coil 902 in order to be sealed, the magnitude of the currents induced in the corner regions of the closure 904 will be greater than the magnitude of the currents induced in the straight portions of the closure. The magnitude of the magnetic field generated from the straight portions 906 of the induction coil 902 is greater than the magnitude of the magnetic field generated from the corner portion 908 of the induction coil. Thus, the reduced separation between the corner portions 908 of the coil and the closure compensates for the weaker magnetic field in those regions, resulting in a relatively uniform heating effect around the edge of the closure 904.

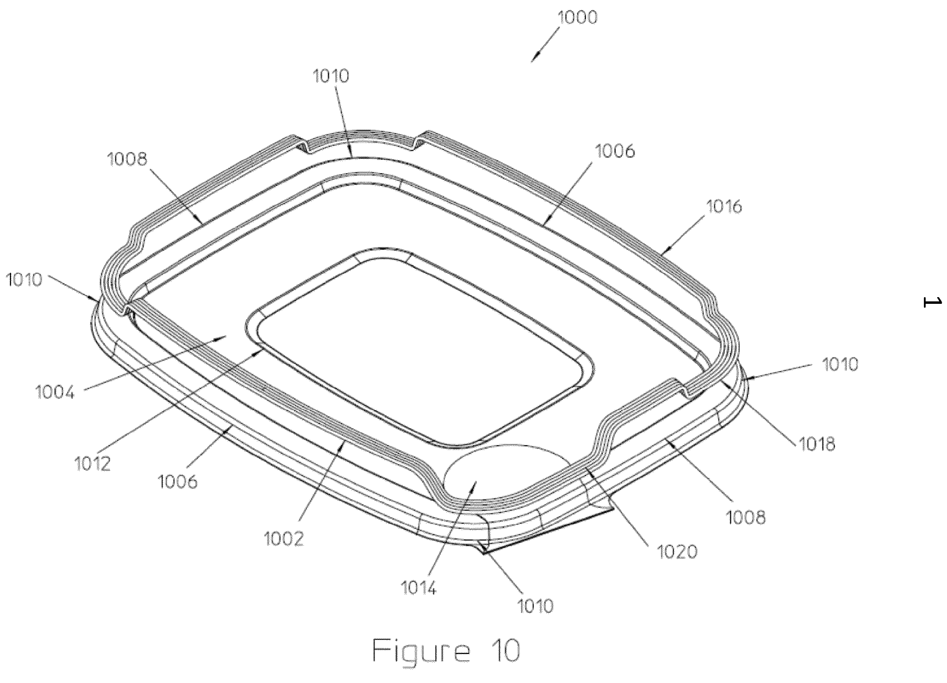

Figure 10 shows an arrangement 1000 including an induction coil 1002 suitable for sealing a closure 1004. The closure 1004 is similar to the closure 600 shown in Figure 6 in that it is a substantially rounded rectangular closure which has two relatively longer substantially straight sides 1006 and two relatively shorter substantially straight sides 1008 which are joined to the longer straight sides by curved corner portions 1010. The closure 1004 has a base portion 1012 and includes a folded-back tab portion 1014 joined to the base portion. The tab portion 1014 can be lifted upwards to provide means for a more easily remove the closure 1004 from a container to which it is sealed. When the tab portion 1014 is laid flat against the base portion 1012, the thickness of the closure 1004 in the region including the tab portion 1014 is greater than the thickness in the un-tabbed region. In other words, the total thickness of closure 1004 in the region including the tab portion 1014 includes the thickness of the base portion 1012 and the thickness of the tab portion, whereas the thickness of the un-tabbed region of the closure includes only the thickness of the base portion.

To compensate for the extra material in the part of the closure 1004 having the tab portion 1014, and for the relatively weaker magnetic field generated by the corner portions 1010 of the induction coil, the induction coil 1002 has a first portion 1016 corresponding to each of the straight sides of the closure, wound in a first plane substantially parallel to the closure 1004, and a second portion 1018 corresponding to each of the three corners, the second portion being stepped out of the first plane, and lying in a second plane such that separation between the second portion 1018 and the closure is less than the separation between the first portion 1016 and the closure. The induction coil 1002 also has a third portion 1020 corresponding to the tab portion of the closure, the third portion being stepped out of the first plane and/or the second plane, and lying in a third plane such that the separation between the third portion and the closure is less than the separation between the second portion and the closure. As a consequence, when the closure 1004 is moved under a sealing head which includes the induction coil 1002 in order to be sealed, the magnitude of the currents induced in the straight sides 1006 of the closure will be less than the magnitude of the currents induced in the corner portions 1010 of the closure which, in turn, will be less than the magnitude of the currents induced in the corner portion of the closure which includes the tab portion 1014. Although the magnitude of the magnetic field generated from the first portion 1016 of the induction coil 1002 is equal to the magnitude of the magnetic field generated from both the second portion 1018 and the third portion 1020 of the induction coil, the reduced separation between the second and third portions of the induction coil and the closure relative to the first portion compensates both for the increased thickness of the portion of the closure 1004 which includes the tab portion 1014 and for the weaker magnetic field in the corner regions, resulting in a relatively uniform heating effect around the edge of the closure.

In some embodiments, the induction coil includes stepped regions configured such that a non-uniform heating profile is created in a closure, for example to create regions of relatively greater heating within a closure. In other embodiments, a multi-turn induction coil formed of a plurality of turns of a wire wound substantially in a first plane might include a subset of the plurality of wires which are stepped out from the first plane, and lie in a second plane.

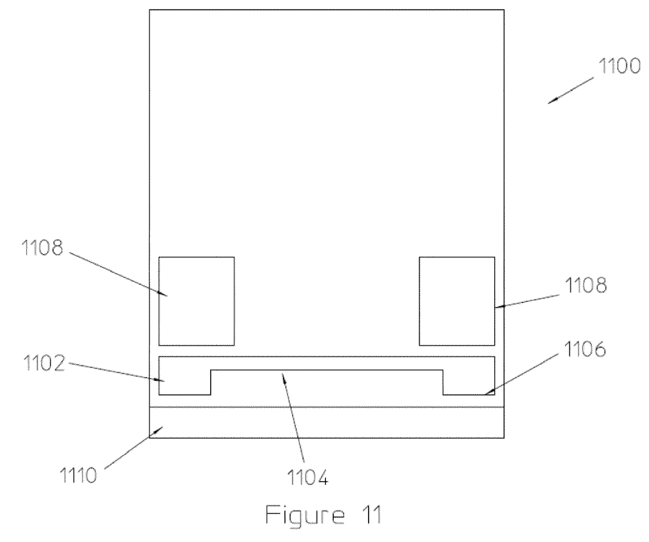

Figure 11 shows, schematically, an induction sealing head 1100 constructed in accordance with an alternative embodiment of the invention. The sealing head 1100 includes an induction coil 1102 having a first portion 1104 wound in a first plane and a second portion 1106 stepped out of the first plane and lying in a second plane substantially parallel to the first plane. In this embodiment, the sealing head 1100 includes magnetic field concentrator elements 1108 in the form of ferrites, which serve to concentrate the magnetic field generated by the induction coil at particular regions. The sealing head 1100 further includes a contact pad 1110 which is configured to engage the closure to be sealed. The contact pad 1110 serves to apply even pressure onto the closure around the aperture of the container to aid the sealing process.

Thus, the present invention is suitable for creating a desired heating profile within closures having a non-circular shape, closures having skirted portions, and closures having tab portions, due to the ability to control the separation between the portions of the induction coil and corresponding portions of the closure to be sealed, and hence the resulting change in the heating effect at particular regions of the closure.

So far, the invention has been described in terms of individual embodiments. However, those skilled in the art will appreciate that various embodiments of the invention, or features from one or more embodiments, may be combined as required. It will be appreciated that various modifications may be made to these embodiments without departing from the scope of the invention, which is defined by the appended claims.

## Claims

1. An induction sealing head for sealing a closure to an aperture of a container, the sealing head comprising an induction coil, wherein the induction coil is wound about an axis, and has a first portion lying substantially in a first plane perpendicular to the axis, and a second portion stepped out of the first plane, and lying substantially in a second plane parallel with the first plane.

2. A sealing head according to claim 1, wherein the induction coil has a third portion stepped out of the first plane and/or the second plane, and lying substantially in a third plane.

3. A sealing head according to claim 2, wherein the third plane is parallel with the first plane and with the second plane.

4. A sealing head according to any of the preceding claims, wherein the induction coil comprises a multi-turn coil.

5. A sealing head according to any of the preceding claims, wherein the induction coil is at least partially enclosed or embedded within a magnetic material.

6. A sealing head according to claim 5, wherein the magnetic material comprises a ferrite.

7. A sealing head according to any of the preceding claims, further comprising a contact pad for engaging with a closure to be sealed;
wherein the contact pad lies substantially in a plane parallel to the first plane and the second plane, and the distance between the contact pad and the first plane is different from the distance between the contact pad and the second plane.

8. A sealing head according to any of the preceding claims, wherein the induction coil has a shape that is substantially circular, and wherein the first and second portions of the induction coil each constitute approximately half of the induction coil.

9. A sealing head according to any of the preceding claims, wherein the induction coil has a shape that is substantially rectangular, and wherein the second portion of the induction coil constitutes at least one corner of the induction coil.

10. An induction sealing system comprising:
an induction sealing head according to any of the preceding claims; and
means for moving a closure and a container into a position relative to the sealing head such that the sealing head can induce a current in the closure.

11. An induction sealing system according to claim 10, wherein the means for moving the closure and the container comprises a linear conveyor, a rotary conveyor or a star wheel conveyor.

12. A method for sealing a closure to an aperture of a container, the method comprising:
providing a sealing head having an induction coil which is wound about an axis, the induction coil having a first portion lying substantially in a first plane perpendicular to the axis, and a second portion stepped out of the first plane, and lying substantially in a second plane parallel with the first plane; and
supplying a current to the induction coil such that the induction coil is capable of inducing a current in a closure to thereby heat the closure and seal the closure to an aperture of a container.

13. A method according to claim 12, wherein the sealing head is a sealing head according to any of claims 1 to 9.
